# EUROPÄISCHE PATENTANMELDUNG

(11) **EP 1 728 659 A1**
(43) Veröffentlichungstag der Anmeldung: **06.12.2006**
(21) Anmeldenummer: 06011058.2
(22) Anmeldetag: 30.05.2006
(51) Int. Cl.: B60H 1/00

(54) **Querträger mit integrierter Luftführung für ein Kraftfahrzeug**

(30) Priorität: 30.05.2005 DE 102005025082
(71) Anmelder: Behr GmbH & Co. KG, 70469 Stuttgart (DE)
(72) Erfinder: Derleth, Martin, Dipl.-Ing. (FH), 97453 Schonungen (DE); Merkle, Christian, 73655 Plüderhausen (DE); Schmitz, Jochen, Dipl.-Ing., 71229 Leonberg (DE); Wolf, Walter, Dipl.-Ing., 71570 Oppenweiler-Zell (DE)

(57) **Zusammenfassung**

Die Erfindung betrifft einen Querträger (1) mit integrierter Luftführung, insbesondere für ein Kraftfahrzeug, wobei der Querträger mindestens eine mit einem Luftkanal auf dessen Außenseite in Kontakt befindliche Öffnung zur Luftein- oder -ausleitung in bzw. aus dem Luftkanal aufweist und der Luftkanal eine Isolation (5) aufweist, die über die einen Öffnungsrand (1') aufweisende Öffnung des Querträgers (1) überstehend ausgebildet ist.

## Beschreibung

Die Erfindung betrifft einen Querträger mit integrierter Luftführung für ein Kraftfahrzeug gemäß dem Oberbegriff des Anspruchs 1.

Aus der DE 100 64 522 A1 ist ein Querträger zum Anordnen zwischen den A-Säulen eines Kraftfahrzeugs mit einem im Wesentlichen rohrartigen Grundkörper bekannt, in dem wenigstens ein Kanal vorgesehen ist. Um ein verbessertes Leichtbauteil zur Verfügung zu stellen, das einfach, mit wenig Arbeitsschritten und daher kostengünstig herzustellen ist, ist der Grundkörper innen mit Kunststoff ausgekleidet zur Bildung von aus Kunststoff bestehenden Kanalwänden.

Ferner ist aus der EP 1 075 972 A2 ein Luftleitsystem für ein Kraftfahrzeug bekannt, gemäß dem in einem geschlossenen Querträger ein Luftführungsrohr integriert ist, wobei der Querträger mit einer auf die Träger-Innenfläche aufgebrachten Wärmeisolationsschicht versehen ist. Der Querträger ist als Querträger für die Instrumententafel ausgebildet und erstreckt sich über die Breite des Fahrzeuginnenraums und ist mit den A-Säulen des Fahrzeugs über Endstücke verschraubt. Er weist endseitig sich mit verjüngendem Querschnitt ausgebildete und zum Fahrzeuginnenraum abgebogene Übergangsabschnitte auf, die in seitlichen Anschlussflanschen enden. Integral mit dem Querträger verbunden sind ferner Befestigungsstellen für die Instrumententafel, die Knieschutzhalter, eine zwischen diesen liegende Lenksäulenstu̅tze eine Befestigungslasche für den Beifahrer-Airbag sowie zwei den Querträger im Mittelabschnitt am Fahrzeugtunnel abstützende Rechteckstreben, zwischen denen das Heiz- und Klimagerät angeordnet ist.

Der Querträger gemäß der EP 1 075 972 A2 dient unter anderem der Luftführung vom Heiz- und Klimagerät zu den vorderen Seitenfenster-Belüftungsdüsen und enthält zu diesem Zweck zwei an das Heiz- und Klimagerät anschließbare, symmetrisch zur Trägermitte angeordnete Verbindungsflansche, die durch eine Zwischenwand im Trägerinneren voneinander getrennt sind. Aus Korrosionsschutzgründen und um störende Wärmespeichereffekte des Hohlträgermaterials zu unterbinden, ist das Trägerinnere mit einer feuchtigkeitssperrenden und wärmedämmenden Isolationsschicht, bspw. aus einem geschlossenporigen Schaumstoff belegt, die sich auf jeder Halbseite des Querträgers unter Einbeziehung der Flanschabschnitte durchgehend über die Trägerinnenfläche erstreckt. Auf diese Weise wird der Querträger als Luftführungsrohr unmittelbar in das Luftleitsystem des Kraftfahrzeugs einbezogen, ohne dass zum Anschluss der seitlichen Belüftungsdüsen an die Anschlussflansche und/oder das Heiz- und Klimagerät an die Verbindungsflansche gesonderte Luftlert- oder -umlenkstücke angefügt werden müssen. Hergestellt wird der Querträger einschließlich sämtlicher Anschlussstellen als einstückiges Bauteil, etwa aus Aluminium im Druckguss-oder lnnenhochdruckverfahren. Dabei werden die luftein- und -auslassseitigen Querträgeröffnungen entsprechend dem benötigten Strömungsquerschnitt zuzüglich der Wandstärke der Isolationsschicht so klein wie möglich gehalten und im Randbereich noch zusätzlich durch die Flanschabschnitte versteift. Nach dem Aufbringen des Schaumstoffmaterials auf die Trägerinnenflächen - ggf. unter Zwischenlage einer Klebstoffschicht - ist der Querträger einbaufertig.

Derartige Querträger lassen jedoch noch Wünsche offen, insbesondere in Hinblick auf die Anzahl der Teile und die damit in Verbindung stehenden Herstellungskosten.

Es ist Aufgabe der Erfindung, einen verbesserten Querträger mit integrierter Luftführung zur Verfügung zu stellen.

Diese Aufgabe wird gelöst durch einen Querträger mit integrierter Luftführung mit den Merkmalen des Anspruchs 1. Vorteilhafte Ausgestaltungen sind Gegenstand der Unteransprüche.

Der Querträger mit integrierter Luftführung, insbesondere für ein Kraftfahrzeug, weist mindestens eine mit einem Luftkanal auf dessen Außenseite in Kontakt befindliche Öffnung zur Luftein- oder -ausleitung in bzw. aus dem Luftkanal auf, wobei der Luftkanal eine Isolation aufweist oder durch dieselbe direkt gebildet wird. Dabei steht die Isolation über die einen Öffnungsrand aufweisende Öffnung des Querträgers über, so dass ein Anschlussbauteil, wie eine Düse, dicht anbringbar ist, ohne dass eine weitere Abdichtung erforderlich ist.

Erfindungsgemäß ist insbesondere ein Querträger mit integrierter Luftführung vorgesehen, wobei der Querträger mindestens eine Öffnung zur Luftein- oder -ausleitung in den Innenraum desselben aufweist und im Innenraum des Querträgers eine mindestens einen Luftkanal bildende Isolation vorgesehen ist, die nach außen überstehend, insbesondere vor dem Aufschieben eines Anschlussbauteils frei nach außen überstehend, ausgebildet ist. Die Isolation kann hierbei auch mehrteilig ausgebildet sein, so dass im Bereich der Öffnung nur eine Art Manschette vorgesehen ist. Im übrigen Bereich des Querträgers kann die Isolation bspw. durch eine auf die Innenflächen aufgesprühte Isolation gebildet sein. Dadurch, dass die Isolation im Bereich der Öffnung des Querträgers nach außen übersteht, ist eine vereinfachte Montage des Anschlussbauteils durch Aufschieben möglich, wobei die Isolation gleichzeitig auch die Funktion einer Dichtung übernimmt.

Die Isolation, d.h. der Luftkanal, besteht bevorzugt aus einem Schaummaterial. Der Luftkanal wird bevorzugt im Twin-sheet-Verfahren hergestellt. Hierbei werden zwei geschäumte Folien gleichzeitig tiefgezogen und miteinander im Bereich der Ränder (1-6 mm) verklebt oder verschweißt. Im Falle verschweißter, den Querträger bildender Halbschalen wird der Luftkanal vorzugsweise vor dem Verschweißen der den Querträger bildenden Halbschalen in die Trägerstruktur eingelegt oder nach dem Verschweißen eingebracht.

Eine weitere Herstellungsmöglichkeit für die Isolation besteht darin, dass der Luftkanal blasgeformt wird, wobei beim Blasen die Wände direkt aufgeschäumt werden. Der Vorteil dieses Verfahrens liegt neben einer verkürzten Prozesskette auch darin, dass keine Ränder zum Fügen erforderlich sind, die zusätzlichen Bauraum beanspruchen, beim Umbiegen sich störend auswirken und ggf. auch reißen können. Der Luftkanal kann auch aus einem Schlauch mit geschäumten Wänden gebildet sein.

Das Anschlussbauteil wird bevorzugt unter Verformung, insbesondere bevorzugt unter elastischer Verformung, der des überstehenden Bereichs der Isolation auf die Öffnung des Querträgers geschoben. Sie wird hierbei bevorzugt im Bereich eines Randes oder einer Querschnittsvergrößerung, vorzugsweise während des Aufschiebens des Anschlussbauteils, umgeschlagen oder umgebogen, insbesondere nach außen.

Bevorzugt weist die Isolation einen nach außen über die Öffnung des Querträgers überstehenden Rand mit größerem, insbesondere sich vergrößerndem Querschnitt und/oder eine Querschnittsvergrößerung, verglichen mit dem Querschnitt der Isolation im Bereich der Öffnung im Querträger auf_ Dies ermöglicht ein einfaches Einführen des aufzuschiebenden Anschlussbauteils in die Isolation, so dass das Anschlussbauteil unter nach außen Umbiegen der Isolation und ggf. vollständigem Umschlagen derselben auf die Öffnung des Querträgers aufgeschoben werden kann. Vor dem Aufschieben des Anschlussbauteils ist der überstehende Rand vorzugsweise in einem Winkel von 45° bis 180°, insbesondere von 90° +/- 45°, insbesondere bevorzugt von 90° +/- 30°, zur Wand des Querträgers im Bereich der Öffnung angeordnet. Wird die den Luftkanal bildende Isolation mittels des Twin-sheet-Verfahrens hergestellt, so sind keine Hinterschnitte möglich, so dass in diesem Fall die Erweiterung nach außen zwischen 0 und 90° liegt.

Die Isolation wird vorzugsweise mit ihrem überstehenden Bereich im aufgeschobenen Zustand des Anschlussbauteils in einem Winkel von weniger als 180° umgebogen und liegt im zusammengeschobenen Zustand unter elastischer Vorspannung an der Innenfläche des Anschlussbauteils. Dies ermöglicht einen optimalen Toleranzausgleich in axialer und radialer Richtung, so dass eine Blindmontage problemlos möglich ist. Ferner sind deutlich größere Herstellungstoleranzen möglich, auch in Hinblick auf einen Winkel- oder Achsversatz, wodurch die Herstellungskosten gesenkt werden können.

Im Falle besonders großer Toleranzen (axial, radial und/oder Position) kann das Anschlussbauteil zusätzlich mit einer Schaumdichtung versehen sein, bspw. mit einem PU-Schaum-Streifen.

Wird der überstehende Bereich der Isolation vollständig umgeschlagen, so wird der zwischen der Öffnung des Querträgers und der Innenfläche des Anschlussbauteils angeordnete Bereich der Isolation bevorzugt eingeklemmt, wodurch eine gewisse Fixierung und eine ausreichende Abdichtung zwischen den beiden Bauteilen erfolgt. Folglich kann auf eine zusätzliche Abdichtung und gegebenenfalls auch auf eine zusätzliche Fixierung verzichtet werden. Bei ausreichender Überdeckung ist zudem ein axialer Toleranzausgleich gegeben. In Folge des Toleranzausgleichs ist auch eine Blindmontage relativ problemlos möglich.

Bevorzugt ist ein Rand oder mindestens eine Nase am Anschlussbauteil vorgesehen, der bzw. die in Zusammenbaurichtung vorsteht und benachbart zum Ende des Anschlussbauteils auf der Innenseite desselben angeordnet ist. Dadurch kann auf einfache Weise verhindert werden, dass ein Teil der Isolation beim Zusammenbau von Querträger und Anschlussteil nach innen gelangt, wodurch dieselbe beschädigt würde.

Ein definiertes Umschlagen der Isolation kann durch einen Anschlag sichergestellt werden, der auf der Außenseite des Anschlussbauteils vorgesehen ist, wobei er vorzugsweise umlaufend ausgebildet ist, jedoch sind auch einzelne Nasen möglich.

Als Material für die Isolation wird vorzugsweise ein chemisch oder physikalisch geschäumter Thermoplast, wie insbesondere Polyethylen oder Polypropylen verwendet. Dabei liegt der Werkstoff bevorzugt als Halbzeug in Form einer Schaumfolie oder eines Schaumschlauchs vor, insbesondere mit einer Dicke von 1 bis 6 mm, vorzugsweise von 2,5 bis 3,5 mm und insbesondere von ca. 3 mm. Die Dichte beträgt bevorzugt 30 bis 500 g/l, vorzugsweise 50 bis 200 g/l, insbesondere ca. 100 g/l.

Als Isolationsmaterialien kommen ggf. auch Schäume, wie PU-Schäume, Partikelschäume, Mineralschäume mit unterschiedlichsten Bindem in Frage. So sind insbesondere EPP, EPE, EPS, EPS/PPO, XPP, XPE oder chemisch oder physikalisch geschäumte Polyolefine geeignet. Aus Feuchtigkeitsgründen ist der Schaum bevorzugt geschlossenporig ausgebildet.

Die Isolation wird vorzugsweise in den Querträger eingelegt, wobei sie zur Fixierung an den Innenflächen des Querträgers zumindest bereichsweise angeklebt werden kann.

Die Öffnung kann auch in einem mit dem Querträger verbundenen Bauteil oder durch einen am Querträger ausgebildeten Bereich gebildet sein, wobei vorzugsweise der Luftkanal zumindest bereichsweise außerhalb des Querträgers verlaufend angeordnet ist. Dies ermöglicht eine kleinere Dimensionierung des Querträgers, beispielsweise im Beifahrerbereich, so dass durch eine bedarfsgerechte Dimensionierung Gewicht eingespart werden kann.

lm Folgenden wird die Erfindung anhand mehrerer Ausführungsbeispiele mit Varianten, teilweise unter Bezugnahme auf die Zeichnung, im Einzelnen erläutert. In der Zeichnung zeigen:
- Fig. 1: einen ausschnittsweisen Schnitt quer durch einen Querträger mit Isolation und ein Anschlussbauteil gemäß dem ersten Ausführungsbeispiel, wobei im linken Teil von Fig. 1 das Anschlussbauteil am Anfang des Aufschiebens und der überstehende Rand der Isolation in entsprechender Stellung sowie in der Endstellung und im rechten Teil von Fig. 1 das Anschlussbauteil im aufgeschobenen Endzustand dargestellt ist,
- Fig. 2: einen ausschnittsweisen Schnitt quer durch den Querträger mit Isolation gemäß dem ersten Ausführungsbeispiel im Ausgangszustand,
- Fig. 3: einen ausschnittsweisen Schnitt quer durch den Querträger mit Isolation und das Anschlussbauteil gemäß dem ersten Ausführungsbeispiel, wobei im rechten Teil von Fig. 3 das Anschlussbauteil am Anfang des Aufschiebens und der überstehende Rand der Isolation in entsprechender Stellung sowie in der Endstellung und im linken Teil von Fig. 3 das Anschlussbauteil vor dem Aufschieben dargestellt ist,
- Fig. 4: einen ausschnittsweisen Schnitt quer durch den Querträger mit Isolation gemäß dem zweiten Ausführungsbeispiel im Ausgangszustand,
- Fig. 5: einen ausschnittsweisen Schnitt quer durch einen Querträger mit Isolation und ein Anschlussbauteil gemäß dem dritten Ausführungsbeispiel, wobei im linken Teil von Fig. 5 das Anschlussbauteil am Anfang des Aufschiebens und der überstehende Rand der Isolation in entsprechender Stellung und im rechten Teil von Fig. 5 das Anschlussbauteil nach dem **Aufschieben dargestellt ist, .**
- Fig. 6: einen ausschnittsweisen Schnitt quer durch einen Querträger mit Isolation gemäß dem vierten Ausführungsbeispiel im Ausgangszustand,
- Fig. 7: einen ausschnittsweisen Schnitt quer durch einen Querträger mit Isolation und ein Anschlussbauteil gemäß dem fünften Ausführungsbeispiel am Anfang des Aufschiebens,
- Fig. 8: einen ausschnittsweisen Schnitt quer durch einen Querträger von Fig. 7 nach dem Aufschieben,
- Fig. 9: eine Detailansicht zur Verdeutüchung des axialen Toleranzausgleichs,

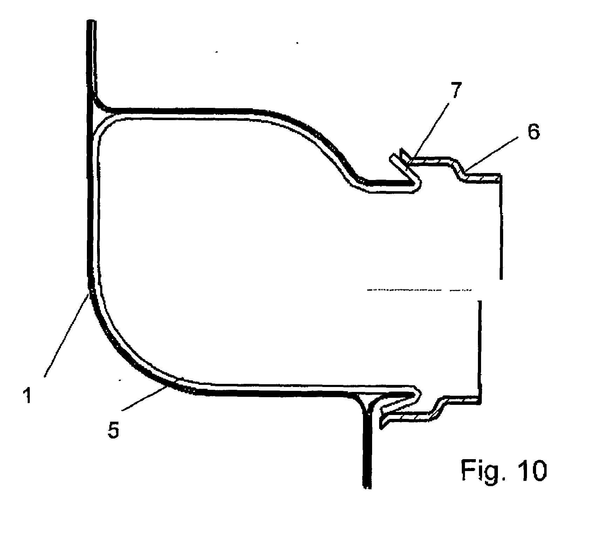

- Fig. 10: eine Detailansicht zur Verdeutlichung des radialen und axialen Toleranzausgleichs,
- Fig. 11: zwei perspektivische Ansichten eines Querträgers mit integrierten Anbindungen und Luftführungen,
- Fig. 12: einen ausschnittsweisen Schnitt quer durch einen Querträger mit Isolation und ein Anschlussbauteil gemäß dem sechsten Ausführungsbeispiel, wobei im oberen Teil von Fig. 12 das Anschlussbauteil am Anfang des Aufschiebens und im unteren Teil von Fig. 12 das Anschlussbauteil nach dem Aufschieben dargestellt ist,
- Fig. 13: eine perspektivische Ansicht eines Bereichs eines Querträgers mit Anschlussbauteil gemäß dem siebten Ausführungsbeispiel,
- Fig. 14: den Querträger mit Anschlussbauteil von Fig. 13 in Explosionsdarstellung,
- Fig. 15: einen ausschnittsweisen Schnitt quer durch einen Querträger mit Isolation und ein Anschlussbauteil gemäß dem achten Ausführungsbeispiel,
- Fig. 16: einen ausschnittsweisen Schnitt quer durch einen Querträger mit Isolation und ein Anschlussbauteil gemäß dem neunten Ausführungsbeispiel, wobei im linken Teil von Fig. 16 das Anschlussbauteil am Anfang des Aufschiebens und im rechten Teil von Fig. 16 das Anschlussbauteil nach dem Aufschieben dargestellt ist,

- Fig. 17: eine perspektivische ausschnittsweise Darstellung des Querträgers mit Anschlussbauteil von Fig. 15 im aufgeschobenen Zustand,
- Fig. 18: eine Prinzipdarstellung einer Öffnung mit nach außen stehendem Rand, wobei im oberen Teil der Fig. 18 die Isolation in Richtung nach innen (links) mit konstantem Querschnitt und im unteren Teil von Fig_ 18 mit sich vergrößerndem Querschnitt ausgebildet ist,
- Fig. 19: eine Prinzipdarstellung einer Öffnung mit nach innen stehendem Rand, wobei im oberen Teil der Fig. 19 die Isolation in Richtung nach innen (links) mit konstantem Querschnitt und im unteren Teil von Fig. 19 mit sich vergrößerndem Querschnitt ausgebildet ist,
- Fig. 20: einen ausschnittsweisen Schnitt quer durch einen Querträger mit außen verlaufendem Luftkanal und ein Anschlussbauteil gemäß dem zehnten Ausführungsbeispiel,

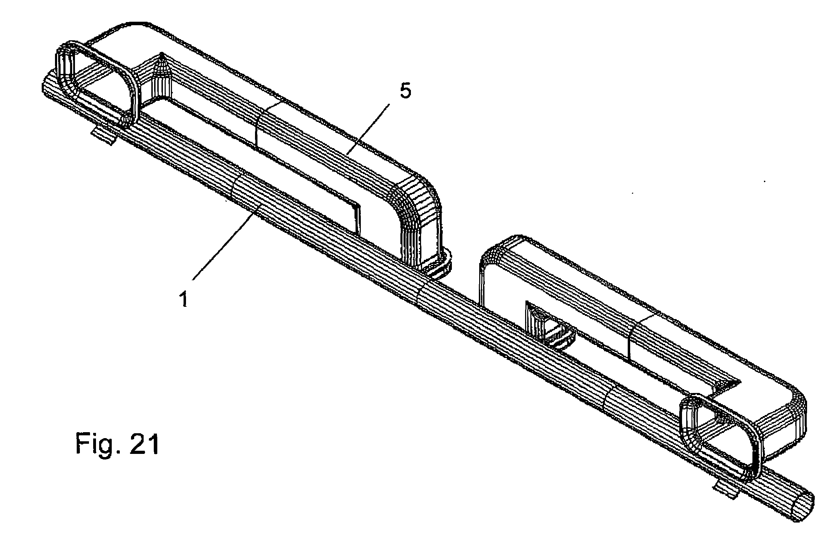

- Fig. 21: eine perspektivische Darstellung des Querträgers von Fig. 20 mit zwei Luftkanälen,

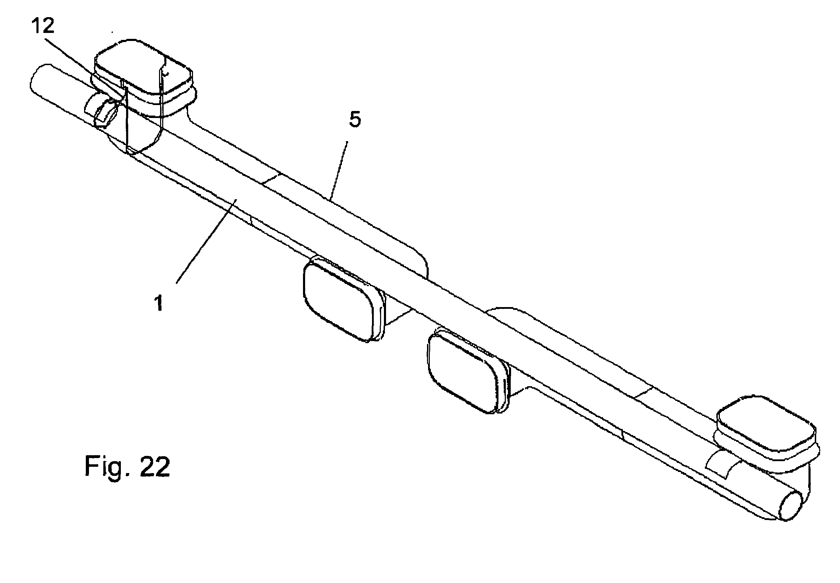

- Fig. 22: eine perspektivische Darstellung mit Schnittkontur des Querträgers von Fig. 20 mit zwei Luftkanälen, und
- Fig. 23: einen ausschnittsweisen Schnitt quer durch einen Querträger mit außen verlaufendem Luftkanal und ein Anschlussbauteil gemäß dem elften Ausführungsbeispiel.

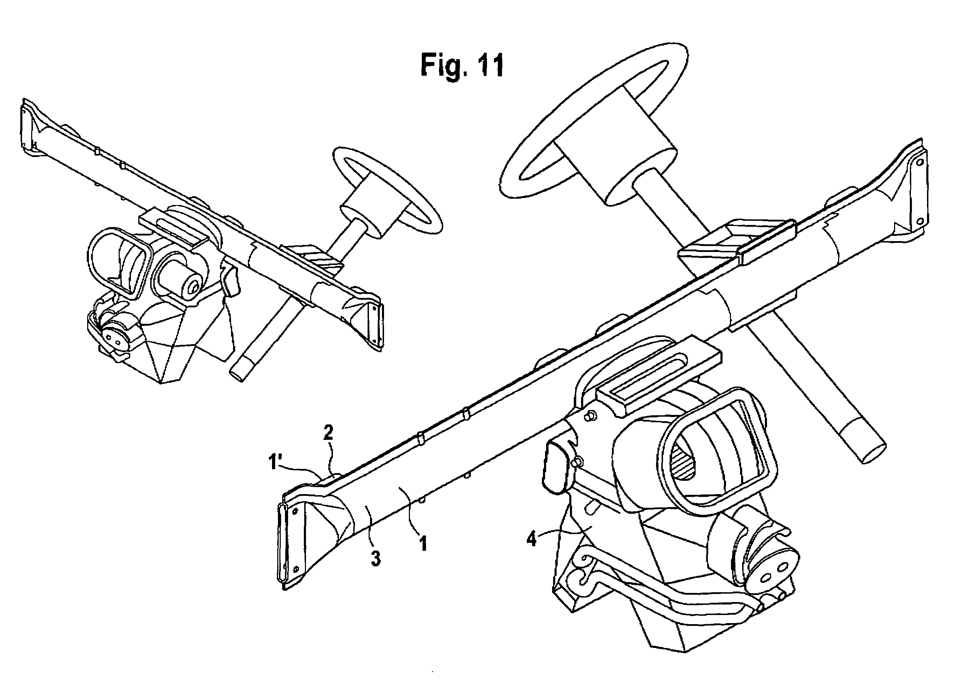

Ein Querträger 1 eines Kraftfahrzeugs mit integrierter Luftführung, wie in Fig. 11 dargestellt, wird gemäß dem vorliegenden ersten Ausführungsbeispiel durch eine erste Halbschale 2 und eine zweite Halbschale 3 gebildet. Dabei weist die erste Halbschale 2 vier Öffnungen für den Luftaustritt durch Düsen (Mittel- und Seitendüsen) in den Fahrzeuginnenraum und die zweite Halbschale 3 eine zentrale Öffnung für den Lufteintritt der von einer Klimaanlage 4 kommenden Luft auf. Hierbei ist vorliegend das Material des Querträgers in Richtung des entsprechenden Anschlussbauteils weisend, vorstehend ausgebildet, im Folgenden auch als Öffnungsrand 1' bezeichnet, d.h. die Wand des Querträgers verläuft im Bereich der Öffnungen im Wesentlichen in oder entgegen der Luftströmungsrichtung.

Bei den beiden den Querträger 1 bildenden Halbschalen 2 und 3 handelt es sich jeweils um eine Metallstruktur, die mittels Tiefziehen und nachfolgendem Bearbeiten hergestellt ist. Andere Herstellungsarten, wie insbesondere Strangpressen oder Walzen, sind ebenfalls möglich. Das Profil kann auch aus einstückigen Profilkörpem gebildet sein und im Prinzip beliebige Querschnittsformen aufweisen. Ebenfalls sind auch mehrere Kammern im Profilquerschnitt möglich. Die Profilverläufe können insbesondere gerade, gleichmäßig in einer Ebene gekrümmt bis hin zu räumlich gekrümmt sein.

Die Enden des Querträgers 1 sind in Folge des Umformvorgangs verbreitert ausgebildet, so dass sie als versteifendes Element dienen. Dadurch ergibt sich, dass das Verhältnis einer ersten Fläche und einem ersten Umfang in einem mittleren Querschnitt kleiner als das Verhältnis einer zweiten Fläche und einem zweiten Umfang in den beiden Endbereichen ist. Die verbreiterte Ausgestaltung der Endbereiche ermöglicht eine momentensteife Anbindung.

Zur Begrenzung einer Verformung der Endbereiche durch zu große Krafteinwirkung, beispielsweise von Montageschrauben, sind Stützkörper, vorliegend in Form von Hülsen (nicht dargestellt), vorgesehen, welche in Verlängerung von Montagebohrungen, die in den Endbereichen zwecks Anbringung des Querträgers 1 vorgesehen sind, im Innenraum des Querträgers 1 angeordnet sind.

An den Längsseiten der Halbschalen 2 und 3 sind jeweils nach außen abstehende Ränder vorgesehen, die in Anlage miteinander gebracht und auf bekannte Weise zusammengefügt werden. Der Innenraum zwischen den beiden Halbschalen 2 und 3 ist hohl und weist eine Isolation 5 auf, die einen Bereich der Luftkanäle des Belüftungssystems bildet, so dass die direkte Durchführung von Luft von der Klimaanlage zu den Öffnungen möglich ist, weshalb auf die Isolation 5 auch als Luftkanal Bezug genommen wird. Damit ist ein Teil des Belüftungssystems direkt in den Querträger 1 integriert.

Gemäß dem vorliegenden Ausführungsbeispiel wird für die Herstellung des Querträgers 1 die Isolation 5 vor dem Verschweißen der den Querträger 1 bildenden Halbschalen 2 und 3, die mit angeschweißten Haltem, Endstücken, etc. versehen sind, eingelegt. Anschließend werden die Halbschalen 2 und 3 miteinander verschweißt.

Die Isolation 5 kann gemäß einer ersten Variante auch nach dem Verschweißen der Halbschalen 2 und 3 eingebracht werden. Entsprechendes ist auch bei anders hergestellten Querträgern möglich, bspw. mittels Gießens hergestellten Querträgern, mittels Innenhochdruck geformten Querträgern, oder bei aus Roll- oder Strangpressprofilen hergestellten Querträgern möglich.

Der Luftkanal kann gemäß einer anderen Variante auch, wenn er auf einem konventionellen Rohrträger oder einer anderen Trägerstruktur montiert wird, dadurch fixiert werden, dass mindestens eine Fixierung vorgesehen ist, die beispielsweise für ein Ende des Luftkanals durch eine am Querträger montierte Klimaanlage, einen Luftverteiler, einen integrierten Ringkörper oder ein anderes Gehäuseteil und für das andere Ende durch einen an der Trägerstruktur befestigen oder integrierten Ring gebildet ist, durch welchen der Luftkanal mit seinem zweiten Ende gesteckt ist. Dadurch werden die Enden des Luftkanals entweder durch einen einfachen Formkörper (z.B. ein Ring mit 10 bis 20 mm Länge) oder durch ein Gehäuseteil gebildet. Das Gehäuseteil kann beispielsweise die Klimaanlage, ein Luftverteiler, ein Stück Luftkanal, eine Luftumlenkung sein.

Gemäß einer weiteren Variante ist die Isolation 5 an der Innenfläche des Querträgers 1 zumindest bereichsweise angeklebt, jedoch bietet diese Variante Nachteile in Hinsicht auf das Recyceln,

Die Isolation 5 besteht gemäß dem ersten sowie den folgenden Ausführungsbeispielen aus einem geschlossenporigen Schaumstoff, vorliegend chemisch geschäumtem Polyethylen, der eine gewisse Elastizität aufweist, insbesondere dehnbar ist.

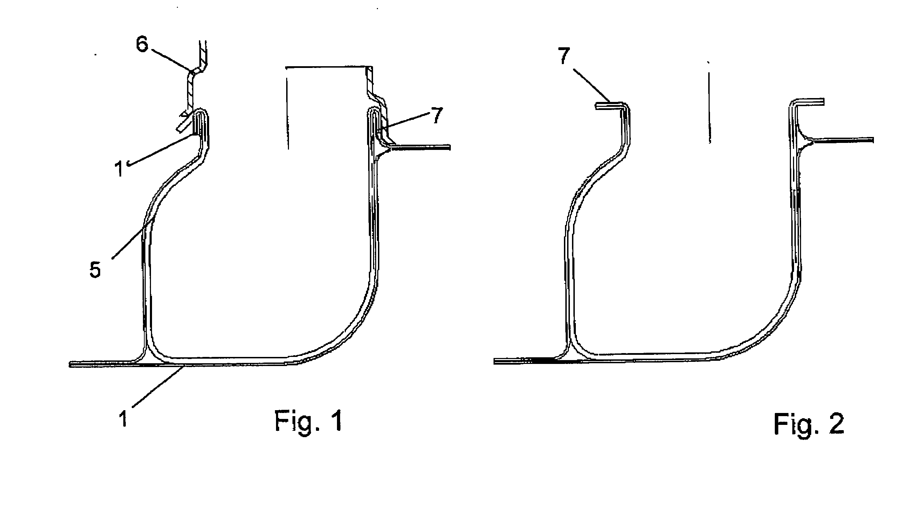

Fig. 1 zeigt einen ausschnittsweisen Schnitt quer durch den Querträger 1 im Bereich einer der Öffnungen, vorliegend einer der Seitendüsen 6, welche ebenfalls bereichsweise als Anschlussbauteil dargestellt ist.

Wie aus Fig. 2 ersichtlich, steht die Isolation 5 gemäß dem ersten Ausführungsbeispiel vor dem Anbau des Anschlussbauteils in einem flanschartigen Rand 7 in radialer Richtung, d.h. in einem Winkel von 90° zur Wand des Querträgers im Bereich der Öffnung, nach außen über.

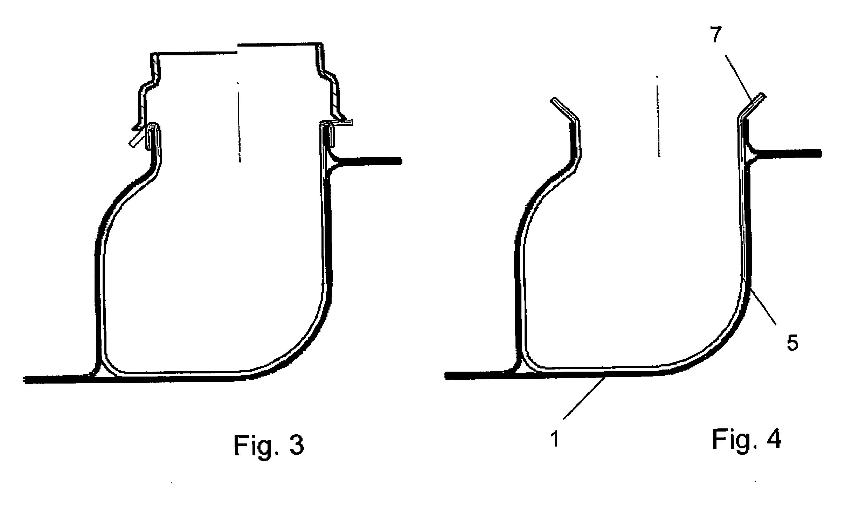

Wird das Anschlussbauteil aufgesetzt, so wird der Rand 7 nach hinten umgebogen (vgl. Fig. 3), bis er vollständig umgeschlagen ist (vgl. rechter Teil von Fig. 1). Hierbei wird er zwischen der Wand des Querträgers 1 im Bereich der Öffnung und dem Rand des Anschlussbauteils eingeklemmt, so dass eine luftdichte Verbindung ausgebildet wird. Das Anschlussbauteil wird vorliegend mittels Schrauben (nicht dargestellt) zusätzlich gesichert, jedoch ist dies bei entsprechender Dimensionierung und Materialwahl nicht notwendigerweise erforderlich- Ebenfalls sind andere Verbindungen möglich, insbesondere Clipsverbindungen oder Verbindungen in Art eines BajonettVerschlusses. Das Anschlussbauteil kann auch über ein drittes Bauteil fixiert sein, z.B. kann das Anschlussbauteil eine Ausströmer-Einheit sein, welche in der 1-Tafel gesichtert ist, bspw. Mittels verrasten oder verclipsen.

Gemäß dem zweiten, in Fig- 4 dargestellten Ausführungsbeispiel ist der überstehende Rand 7 der Isolation 5 ein einem Winkel von ca_ 45° nach außen gebogen ausgebildet. Entsprechend dem ersten Ausführungsbeispiel wird der Rand 7 bei "Einführen" des Anschlussbauteils nach außen umgebogen, so dass sich im zusammengefügten Zustand wiederum ein umgeschlagener Rand 7 zwischen der Wand des Querträgers im Bereich der Öffnung und dem Rand des Anschlussbauteils ergibt.

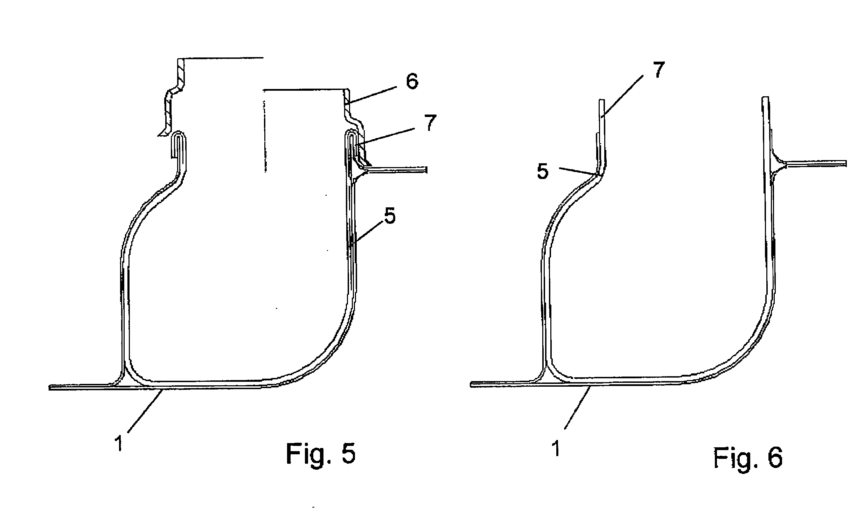

Gemäß dem in Fig. 5 dargestellten dritten Ausführungsbeispiel ist der Rand 7 der Isolation 5 bereits vor dem Aufsetzen des Anschlussbauteils nach hinten umgeschlagen. Dies kann durch Herstellung einer entsprechend ausgebildeten Isolation 5 erfolgen, welche in den Querträger eingebaut wird.

Fig. 6 zeigt das vierte Ausführungsbeispiel, wobei die Isolation 5 als gerade überstehender Rand 7 ausgebildet ist, welcher vor dem Aufsetzen des Anschlussbauteils nach außen umgeschlagen wird (vgl. Fig. 5). Dies kann bspw. von Hand erfolgen.

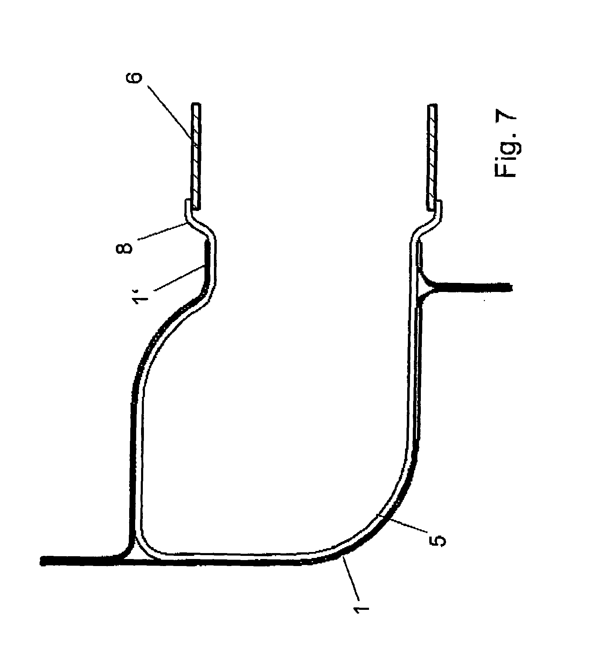

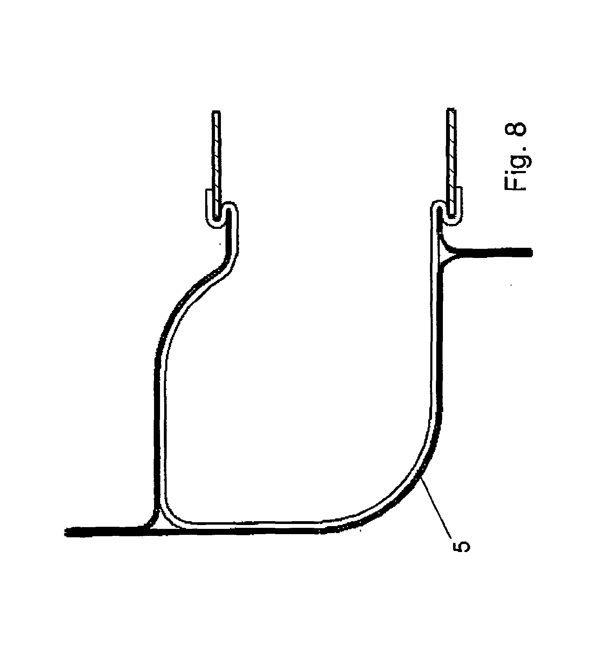

Gemäß dem in Fig. 7 dargestellten fünften Ausführungsbeispiel ist die Isolation 5 mit einer Querschnittsvergrößerung 8 ausgebildet, wobei die Querschnittsvergrößerung 8 so groß ist, dass das Anschlussbauteil problemlos eingeführt und auf die Öffnung aufgeschoben werden kann, so dass die Querschnittsvergrößerung 8 in ihrer Funktion dem Rand 7 entspricht. Hierbei kann jedoch ein Teil der Isolation 5 nach dem Aufschieben des Anschlussbauteils auf den Querträger 1 außerhalb angeordnet sein (vgl. Fig. 8).

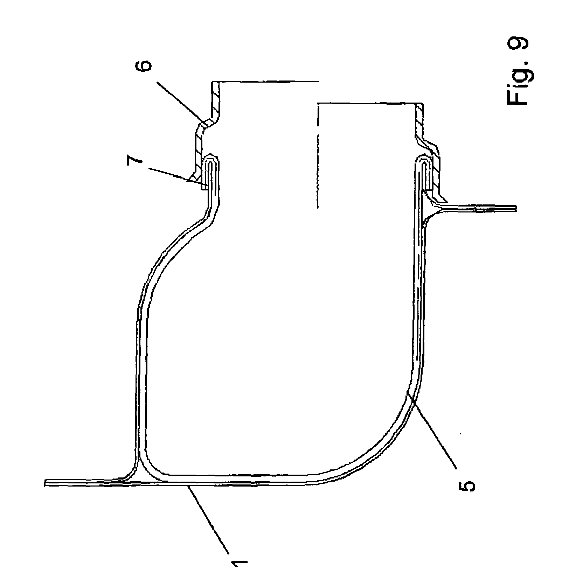

Wie aus Fig. 9 ersichtlich, ermöglicht das Umschlagen des Randes 7 einen axialen Toleranzausgleich, wobei im oberen Teil von Fig. 9 das minimale Aufschieben und im unteren Teil von Fig. 9 das maximale Aufschieben dargestellt ist, bei welchem jeweils noch eine ausreichende Abdichtung zwischen Querträger 1 und Anschlussbauteil vorhanden ist.

Im Falle eines Umbiegens des Randes 7 ist - bei entsprechend federnder Anlage der Isolation 5 am Anschlussbauteil - neben dem axialen Toleranzausgleich auch ein radialer Toleranzausgleich möglich.

Um die Abdichtung zu verbessern kann der aufzuschiebende Bereich des Anschlussbauteils mit einem vergrößerten Querschnitt und der benachbarte, nicht aufgeschobene Bereich mit einem Querschnitt ausgebildet sein, der demjenigen des Querträgers im Bereich der Öffnung entspricht.

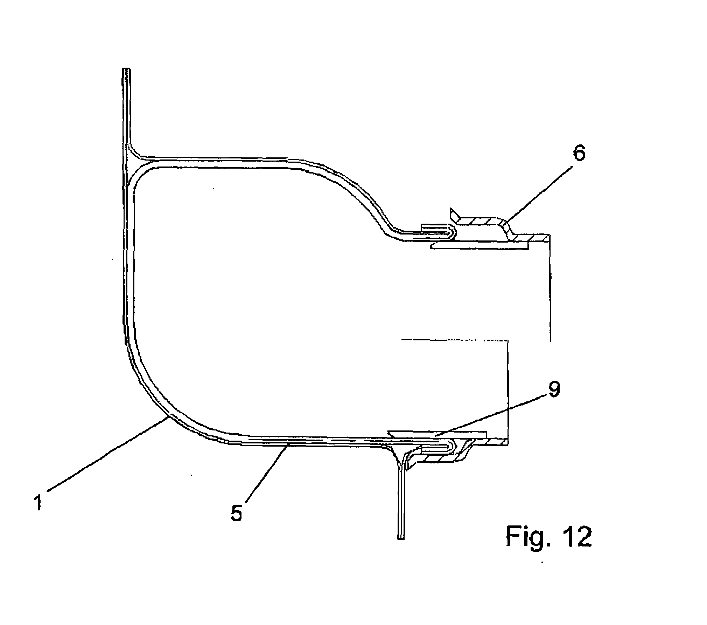

Gemäß dem in Fig. 12 dargestellten sechsten Ausführungsbeispiel ist, um zu verhindern, dass die Isolation 5 während der Montage nach innen kippt und dadurch beschädigt werden kann, ein umlaufender Rand 9 parallel zum auf die Öffnung des Querträgers 1 geschobenen Bereich des Anschlussbaufieils 6 vorgesehen. Dieser Rand 9 steht in Montagerichtung etwas über den aufzuschiebenden Bereich über, wobei der Rand 9 angefast ist, so dass das Einschieben des Randes 9 erleichtert und Beschädigungen der Isolation 5 vermieden wird. Um ein verbessertes Umlegen des Randes 7 der Isolation 5 bei einem langen Überstand desselben zu ermöglichen, sind bei der Isolation 5 die Ecken freigeschnitten. Das Prinzip des Freischnitts ist an den Ecken der Isolation 5 von Fig- 14 ersichtlich.

Alternativ zu einem umlaufenden Rand 9 am Anschlussbauteil kann auch eine Mehrzahl von Nasen vorgesehen sein, welche den gleichen Effekt haben.

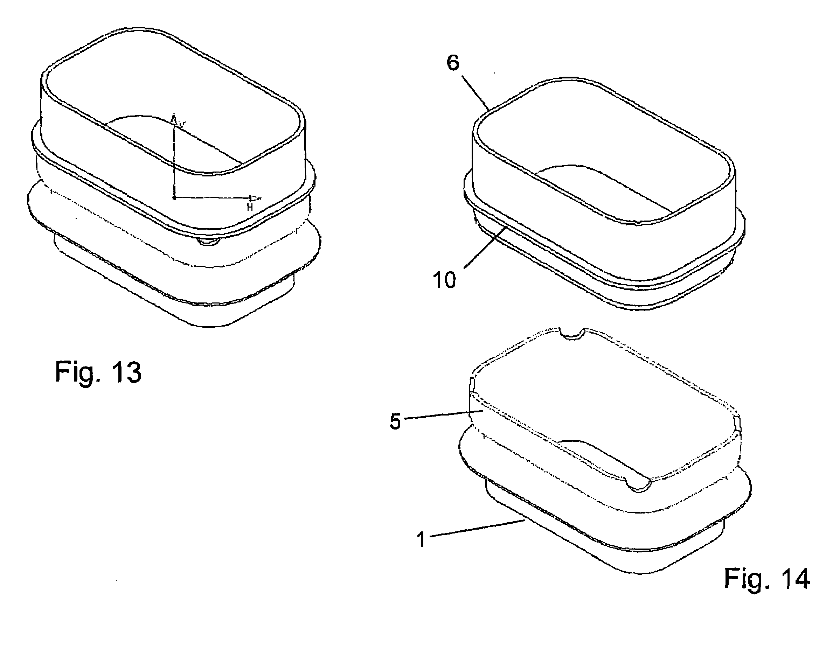

In den Figuren 13 und 14 ist als siebtes Ausführungsbeispiel eine abgerundet rechteckförmige Öffnung eines Querträgers 1 mit herausragender Isolation 5 dargestellt, in welche ein Endbereich eines Anschlussbauteils 6 bis zu einem Anschlag 10 eingeschoben wird. Die Ecken der Isolation 5 sind freigeschnitten, so dass sich die Isolation 5 bei Erreichen des Anschlags 10 definiert nach außen umschlägt, wodurch eine zusätzliche Abdichtung erfolgt.

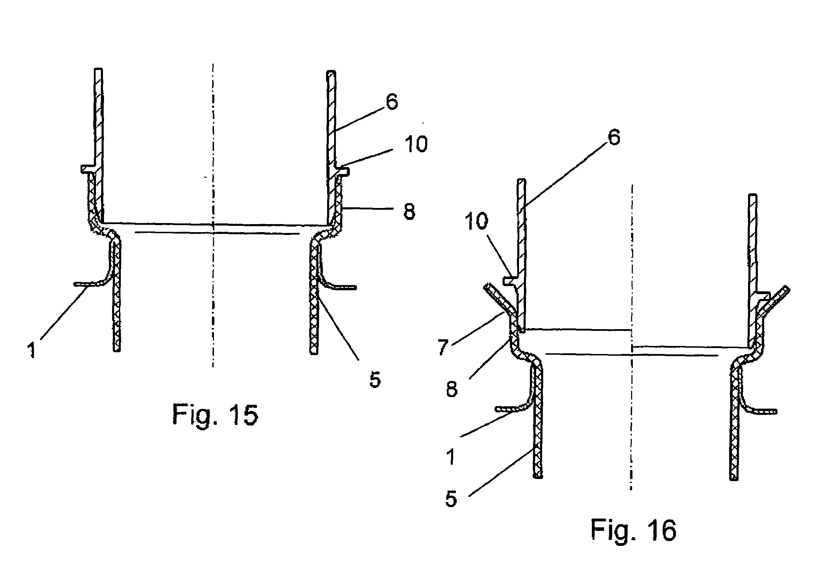

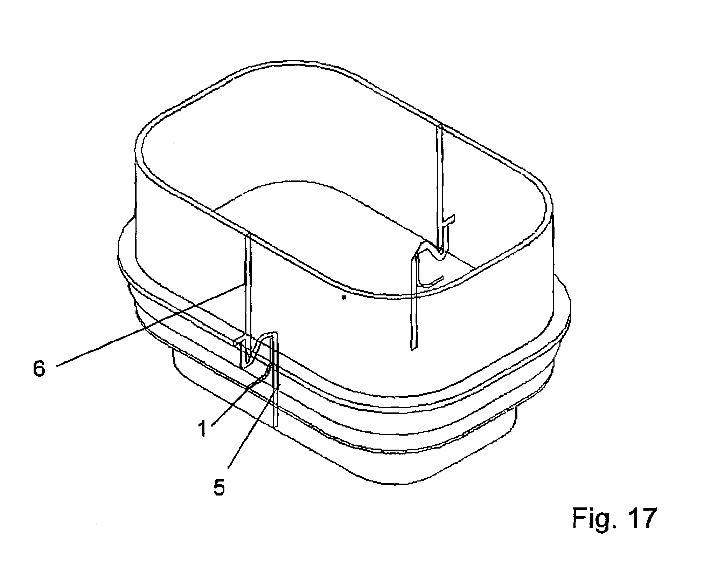

Fig. 15 zeigt ein achtes Ausführungsbeispiel, bei dem der überstehende Bereich der Isolation 5 einen vergrößerten Querschnitt aufweist, in welchen der Endbereich eines Anschlussbauteils 6 eingeschoben ist, wobei das Anschlussbauteil 6 vorliegend nur so weit eingeschoben ist, bis es mit einem Anschlag 10 am Ende der Isolation 5 anliegt. Bei einem weiteren Einschieben wird das Ende der Isolation 5 gefaltet, so dass die Isolation 5 in einem kleinen Bereich dreilagig unter Zwischenlage von einem Endbereich des Querträgers 1 und des Anschlussbauteils angeordnet ist (vgl. Fig. 17).

In Fig. 16 ist als neuntes Ausführungsbeispiel eine Kombination von Querschnittsvergrößerung 8 und in einem 45°-Winkel geöffnetem Rand 7 der Isolation 5 in Verbindung mit einem Anschlag 10 dargestellt, wobei der Rand 7 in Verbindung mit dem Anschlag 10 am Anschlussbauteil 6 das Umschlagen der Isolation 5 unterstützt.

Gemäß einem weiteren, nicht in der Zeichnung dargestellten zehnten Ausführungsbeispiel ist die Isolation mit einem überstehenden Bereich ausgebildet, welcher eine Querschnittsvergrößerung in Form einer einfachen Stufe aufweist. Am Ende des in den überstehenden Bereich der Isolation einzuführenden Bereich des Anschlussbauteils ist ein außen umlaufender Rand vorgesehen, so dass sich das Ende der Isolation bei Einschieben des Anschlussbauteils nach außen aufweitet oder gar aufrollt, Am Ende des Anschlussbauteils kann eine Einführschräge vorgesehen sein, welche das Einführen erleichtert. Dabei kann das Anschlussbauteil bis in die Öffnung eingeführt werden oder aber auch "auf Stoß" unter Zwischenlage der Isolation mit der Öffnung enden, wofür jedoch eine ausreichende Stabilität der Isolation erforderlich ist.

Beim Querträger muss es sich nicht notwendigerweise um einen zwei- oder mehrteiligen Querträger aus Metallschalen handeln. Der Querträger kann auf beliebige andere Weise hergestellt sein, insbesondere auf einstückig ausgebildet sein, jedoch ist in diesem Fall das Einbauen der Isolation etwas schwieriger.

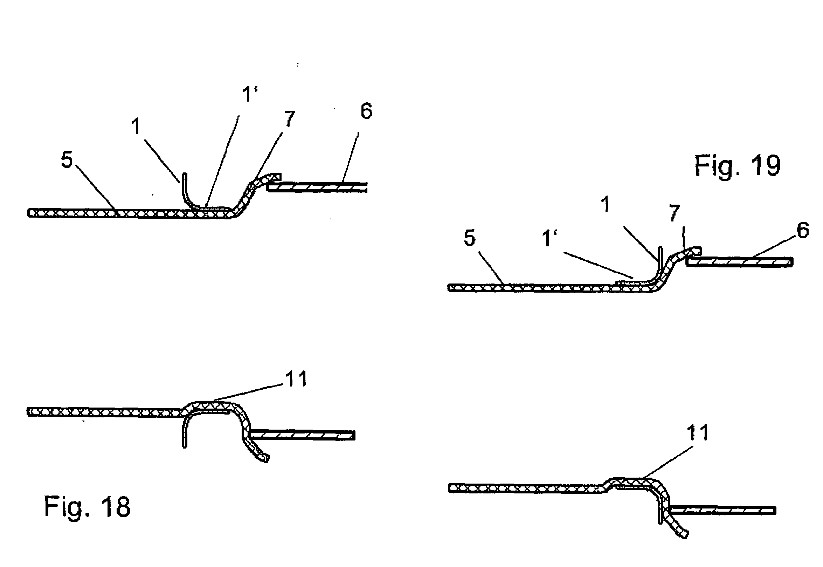

In den Figuren 18 und 19 sind zwei Bauprinzipien näher dargestellt. Hierbei zeigt Fig. 18 eine Öffnung mit sich in Richtung des näheren Endes der Isolation 5 erstreckendem Öffnungsrand 1' und Fig. 19 eine Öffnung mit sich in entgegengesetzter Richtung erstreckendem Öffnungsrand 1'. Die Öffnung kann hierbei durch einen Durchzug gebildet sein, jedoch sind auch andere, ggf. zwei- und mehrteilige Ausführungen möglich, wobei die eigentliche Öffnung, durch welche die Isolation 5 ragt, durch ein weiteres Bauteil gebildet wird. Prinzipiell ist auch eine gelochte Ausgestaltung, d.h. mit einem der Materialstärke des Blechs entsprechenden Öffnungsrand 1' möglich.

Wie aus Fig. 18 ersichtlich, ragt die Isolation 5 durch die Öffnung samt Öffnungsrand 1', wobei sich der Querschnitt der Isolation 5 direkt nach dem Öffnungsrand 1' vergrößert. Der Öffnungsrand 1' ist vorliegend um 90° gegenüber der Öffnungslängsachse umgebogen dargestellt, jedoch sind auch andere Winkel im Bereich von 0 bis 180° möglich. Auf Grund des Einschiebens des Anschlussbauteils, vorliegend einer Seitendüse 6, wird der ursprünglich trichterartig ausgebildete Rand 7 der Isolation 5 elastisch verformt, wodurch zwischen Isolation 5 und Anschlussbauteil eine ausreichend dichte Anlage sichergestellt wird. Um die Isolation 5 zusätzlich zu fixieren, kann, wie in Fig. 18 unten dargestellt, die Isolation 5 im Bereich des Öffnungsrandes 1' eine Art Einschnürung 11 aufweisen.

Fig. 19 zeigt eine Variante mit einem Öffnungsrand 1', der sich weg vom näherliegenden Ende der Isolation 5 erstreckt. Dieser Öffnungsrand 1' ermöglicht ein Verrasten eines entsprechend ausgebildeten Bereichs des Anschlussbauteils, wodurch das Anschlussbauteil am Querträger 1 oder am die Öffnung bildenden Bereich eines am Querträger 1 befestigten Bauteils fixiert werden kann. Der Öffnungsrand 1' ist vorliegend um 90° gegenüber der Öffnungslängsachse umgebogen dargestellt, jedoch sind auch andere Winkel im Bereich von 0 bis 180° möglich. Im unteren Teil von Fig. 19 ist wiederum eine Isolation 5 mit einer Einschnürung 11 dargestellt. An Stelle einer Einschnürung 11 kann hierbei ― wie auch bei einer Fig. 18 entsprechenden Ausführungsform - zur zusätzlichen Fixierung der Isolation 5 ein Absatz, ein Wulst, eine Sicke o.ä. vorgesehen sein.

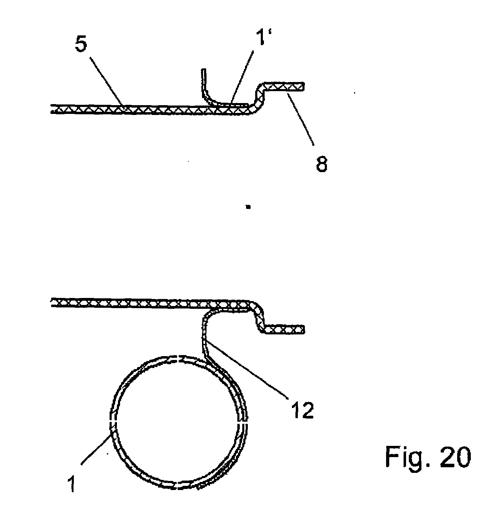

Fig. 20 zeigt ein zehntes Ausführungsbeispiel gemäß dem der Luftkanal außerhalb des Querträgers 1, der einen rohrartigen Querschnitt aufweist, verlaufend angeordnet ist, wobei am Querträger 1 ein Ring 12 mit Halter und einer Öffnung; die einen Öffnungsrand 1' aufweist, angebracht ist. Das Anschlussbauteil ist in Fig. 20 nicht dargestellt, jedoch kann es sich beispielsweise wiederum um eine Seitendüse eines Kraftfahrzeugs handeln. Die den Luftkanal bildende Isolation 5 ist hierbei entsprechend dem in Fig. 18 dargestellten Prinzip durch die Öffnung geführt, wobei der Endbereich der Isolation 5 vorliegend eine Querschnittsvergrößerung 8 aufweist. Die Anbringung des Anschlussbauteils kann bspw. wie in Fig. 8 dargestellt erfolgen.

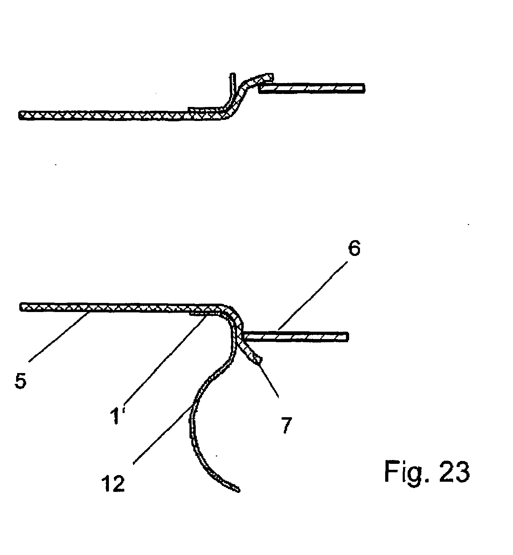

In Fig. 23 ist als elftes Ausführungsbeispiel ein außerhalb des Querträgers 1 verlaufend angeordneter, durch eine Isolation 5 gebildeter Luftkanal dargestellt, welcher wiederum über einen Ring 12 mit Halter und einer Öffnung, die einen Öffnungsrand 1' aufweist, mit dem Querträger 1 verbunden. Hierbei zeigt der Öffnungsrand 1' weg vom Endbereich der Isolation 5 und der Endbereich der Isolation 5 weist einen trichterförmigen Rand 7 auf. Die Fixierung der Anschlussbauteils, bspw. wiederum eine Seitendüse 6, kann auf die unter Bezugnahme auf Fig. 19 beschriebene Weise erfolgen,

Der Ring 12 kann auch direkt an der Instrumententafel fixiert sein, welche ihrerseits am Querträger angebracht ist, so dass der Ring in diesem Fall indirekt am Querträger fixiert ist.

Auf Grund von vorgegebenen Bauräumen für die Luftkanäle und Querträger kann es vorkommen, dass insbesondere eine Querträger mit fahrerseitig in den Innenraum des Querträgers integriertem Luftkanal und beifahrerseitig ein außerhalb des Querträgers verlaufender Luftkanal vorgesehen ist, so dass der Querträger optimal dimensioniert werden kann.

## Patentansprüche

1. Querträger mit integrierter Luftführung, insbesondere für ein Kraftfahrzeug, wobei der Querträger mindestens eine mit einem Luftkanal auf dessen Außenseite in Kontakt befindliche Öffnung zur Luftein- oder -ausleitung in bzw. aus dem Luftkanal aufweist und der Luftkanal eine Isolation (5) aufweist oder durch eine Isolation (5) gebildet ist, **dadurch gekennzeichnet, dass** die Isolation (5) über die einen Öffnungsrand (1') aufweisende Öffnung des Querträgers (1) überstehend ausgebildet ist.

2. Querträger nach Anspruch 1, **dadurch gekennzeichnet, dass** die Öffnung im Querträger (1) ausgebildet ist, wobei die den Luftkanal bildende Isolation (5) zumindest bereichsweise im Querträger (1) verlaufend angeordnet ist.

3. Querträger nach Anspruch 1 oder 2, **dadurch gekennzeichnet, dass** der Querträger die Öffnung eine Öffnung zur Luftein- oder -ausleitung in den Innenraum des Querträgers (1) ist, wobei der Luftkanal sich zumindest bereichsweise im Innenraum des Querträgers (1) erstreckt, und die Isolation (5) über die Öffnung des Querträgers (1) von innen nach außen überstehend ausgebildet ist.

4. Querträger nach einem der vorhergehenden Ansprüche, insbesondere nach Anspruch 1, **dadurch gekennzeichnet, dass** die Öffnung durch ein mit dem Querträger (1) verbundenes Bauteil (12) oder durch einen am Querträger (1) ausgebildeten Bereich gebildet ist, wobei der Luftkanal zumindest bereichsweise außerhalb des Querträgers (1) verlaufend angeordnet ist.

5. Querträger nach einem der vorhergehenden Ansprüche, **dadurch gekennzeichnet, dass** die Öffnung einen Öffnungsrand (1') aufweist, welcher sich zumindest in seinem Endbereich etwa parallel zur Luftströmungsrichtung in Richtung des näheren Endes der Isolation (5), insbesondere nach außen, erstreckt.

6. Querträger nach Anspruch 5, **dadurch gekennzeichnet, dass** die Öffnung mit Öffnungsrand (1') durch einen Durchzug gebildet ist.

7. Querträger nach einem der vorhergehenden Ansprüche, **dadurch gekennzeichnet, dass** ein Anschlussbauteil (6) auf die Öffnung des Querträgers (1) aufgeschoben ist, wobei die Isolation (5) umgeschlagen oder umgebogen ist.

8. Querträger nach einem der vorhergehenden Ansprüche, **dadurch gekennzeichnet, dass** die Isolation (5) nach außen umgeschlagen oder umgebogen ist.

9. Querträger nach einem der vorhergehenden Ansprüche, **dadurch gekennzeichnet, dass** die Isolation (5) vor dem Aufschieben eines Anschlussbauteils (6) aufgeweitet ausgebildet ist, wobei sie einen Rand (7) mit größerem Querschnitt und/oder eine Querschnittsvergrößerung (8), verglichen mit dem Querschnitt der Isolation (5) im Bereich der Öffnung im Querträger (1) aufweist.

10. Querträger nach Anspruch 9, **dadurch gekennzeichnet, dass** vor dem Aufschieben des Anschlussbauteils (6) der Rand (7) in einem Winkel von 45° bis 180°, insbesondere von 90° +/- 45°, zum Öffnungsrand (1') angeordnet ist.

11. Querträger nach einem der vorhergehenden Ansprüche, **dadurch gekennzeichnet, dass** die Isolation (5) mit ihrem überstehenden Bereich im aufgeschobenen Zustand des Anschlussbauteils (6) in einem Winkel von weniger als 180° umgebogen ist und unter elastischer Vorspannung an der Innenfläche des Anschlussbauteils (6) anliegt.

12. Querträger nach einem der vorhergehenden Ansprüche, **dadurch gekennzeichnet, dass** die Isolation (5) mit ihrem überstehenden Bereich im aufgeschobenen Zustand des Anschlussbauteils (6) zwischen der Außenfläche des Querträgers (1) im Bereich der Öffnung und der Innenfläche des Anschlussbauteils (6) eingeklemmt ist.

13. Querträger nach einem der vorhergehenden Ansprüche, **dadurch gekennzeichnet, dass** die Isolation (5) wenigstens in Eckbereichen des überstehenden Bereichs Ausschnitte oder Aussparungen aufweist.

14. Querträger nach einem der vorhergehenden Ansprüche, **dadurch gekennzeichnet, dass** ein Rand (9) oder mindestens eine Nase am Anschlussbauteil (6) vorgesehen ist, der bzw. die in Zusammenbaurichtung vorsteht und benachbart zum Ende des Anschlussbauteils (6) auf der Innenseite oder Außenseite desselben angeordnet ist.

15. Querträger nach einem der vorhergehenden Ansprüche, **dadurch gekennzeichnet, dass** am Anschlussbauteil (6) ein Anschlag (10) ausgebildet ist, welcher auf der Außenseite des Anschlussbauteils (6) nach außen abstehend umlaufend angeordnet ist.

16. Querträger nach einem der vorhergehenden Ansprüche, **dadurch gekennzeichnet, dass** die Isolation (5) durch ein geschäumtes Material, insbesondere einen chemisch oder physikalisch geschäumten Thermoplast, oder einen Schaumstoff, insbesondere einen PU-Schaum, einen Partikelschaum, einen Mineralschaum, gebildet ist.

17. Querträger nach einem der vorhergehenden Ansprüche, **dadurch gekennzeichnet, dass** die Isolation (5) elastisch ausgebildet ist.

18. Querträger nach einem der vorhergehenden Ansprüche, **dadurch gekennzeichnet, dass** die Isolation (5) als Folie oder Schlauch mit einer Dicke von 1 bis 6 mm, insbesondere 3 mm +/- 0,5 mm, ausgebildet ist.

19. Querträger nach einem der vorhergehenden Ansprüche, **dadurch gekennzeichnet, dass** die Isolation (5) als Folie oder Schlauch mit einer Dichte von 30 bis 500 g/l, insbesondere 70 bis 200 g/l, ausgebildet ist.

20. Verfahren zur Montage eines Anschlussbauteils (6) an einem Querträger (1) nach einem der vorhergehenden Ansprüche, wobei das Anschlussbauteil (6) unter Verformung der Isolation (5) auf die Öffnung geschoben wird.

21. Verfahren nach Anspruch 20, **dadurch gekennzeichnet, dass** das Anschlussbauteil (6) unter einer elastischen Verformung der Isolation (5) in Form eines Umschlagens oder Umbiegens eines Randes (7) oder einer Querschnittsvergrößerung (8) aufgeschoben wird.
